# EUROPEAN PATENT SPECIFICATION

(11) **EP 3 623 433 B1**
(45) Date of publication and mention of the grant of the patent: **28.10.2020**
(21) Application number: 19195814.9
(22) Date of filing: 06.09.2019
(51) Int. Cl.: C09D 15/00

(54) **INSULATING COMPOSITION AND KIT COMPRISING SUCH COMPOSITION**
ISOLIERENDE ZUSAMMENSETZUNG UND KIT MIT SOLCH EINER ZUSAMMENSETZUNG
COMPOSITION ISOLANTE ET KIT COMPRENANT UNE TELLE COMPOSITION

(30) Priority: 11.09.2018 IT 201800008481
(43) Date of publication of application: 18.03.2020
(73) Proprietor: IVM Chemicals S.r.l., 20123 Milano (IT)
(72) Inventor: FOGLIANI, Franco, I-20020 Robecchetto con Induno (MI) (IT); VITALE, Marcello, I-20093 Cologno Monzese (MI) (IT); PELLICCI, Giada, I-20010 Bareggio (MI) (IT)
(74) Representative: De Gregori, Antonella

(56) References cited:
- EP-A1- 1 798 264
- WO-A1-2007/130849
- H W SHI ET AL: "Improving corrosion resistance of epoxy coatings modified with silane monomers on AZ31D magnesium alloy", CANADIAN METALLURGICAL QUARTERLY, vol. 51, no. 4, 22 October 2012 (2012-10-22), pages 485-490, XP055652202, CA ISSN: 0008-4433, DOI: 10.1179/1879139512Y.0000000017

## Description

The present invention refers to an insulating composition, to a kit comprising such composition and a coating composition based on the "Real Michael Addition" chemistry, to its use, and to a method for the coating of a substrate employing such kit.

A central challenge in the development of coating systems, particularly of coating systems that harden at low to moderate temperatures, is that of achieving a good balance between a rapid crosslinking during application (also called "polymerization" or "drying") and a long pot life, or useful usage window, that is the ability to work with the paint without problems for a reasonable time after preparation, at least one hour but preferably much longer.

Such challenge is much more important for high solid systems, that comprise less solvent meant to evaporate after application, than for low or medium solid systems, containing a larger quantity of volatile solvent.

The coatings for decorative applications in automotive, metal, plastic, marine or general industrial protective use, for example, require several hours of useful use window to make it possible for the applicator to apply the coating composition on the substrate in a well-controlled manner. The viscosity and the low solvent content of high solid coating systems force the paint formulator to select lower molecular weight resins and/or lower glass transition temperatures, both requiring greater degrees of crosslinking in order to raise the product Tg after crosslinking to levels making it a dry film.

The lower quantity of used solvent will create less film "physical" drying (the physical hardening caused by solvent loss) with respect to paints that use greater quantities of volatile solvents, and the acceleration of the transformation from liquid paint to final coating with solvent loss is also lower, since the increase of the concentration of reactive groups via solvent loss is lower. All these phenomena mean that, for high solid systems, a combination of rapid drying and long pot life is very difficult to achieve, especially as compared to what achievable in low or medium solvent content systems.

To answer the challenges described above, coating formulations based on Real Michael Addition (RMA) chemistry have recently been developed, for example in EP2556106B1, EP2556108B1, EP2764038B1, EP2985308B1, EP2984133B1, EP3283583A1, EP3283556A1, EP3283557A1 and EP3283558A1. These coating formulations present several advantages over the most common types of coating utilized today, in ease of use, resistance and safety.

Firstly, said compositions present improved ease of-use characteristics. RMA-based products can be used for a very long time after having been prepared, that is they present a long pot life, coupled at the same time with a very fast curing time for the applied film. The combination of those properties, a long pot life and a quick crosslinking, is particularly advantageous and highly unusual in known systems.

Even more significant, these two parameters can be independently tuned. Such capability makes RMA-based products preferable to other two-component coating technologies, for which one expects a rough proportionality between pot life and drying time.

From a user's point of view, these products guarantee two advantageous features until now available only as alternative, or at the cost of compromising other performance characteristics, or needing large investment in new production plants.

Such features are: quick product turn-around, even more notably when several coats with sanding steps in between are needed, and the absence of waste of already catalyzed paint, but not used for the application.

Secondly, RMA-based products also show great mechanical and chemical resistances of the cured coatings. These properties make them superior to any one-component coating product. Overall mechanical and chemical resistance is superior to what is obtainable with acrylic products or polyurethane dispersions (PUD) waterborne, solvent borne nitro, solvent borne urea-formaldehyde, conversion varnishes or pre-cat, even solvent borne two-component polyurethane or epoxy based products. Indeed, the resistances of RMA-based coatings are more similar to what is obtainable with radiation-cured coating products, but without the geometrical limitations and the capital investment requirements of those technologies.

Finally, the most significant improvement offered by RMA-based coatings is the achievement of the before-mentioned performance in the absence of isocyanates, polyisocyanates, melamine or formaldehyde, not only in the final products or at application time, but actually anywhere in the value chain, that is neither in the final products, nor on their application or preparation or the synthesis of their components. Overall, that means the absence of compounds that are particularly insidious because dangerous by inhalation with an advantage both for the production operators and for the final users of the coatings. Such chemical difference provides a significant improvement to health and safety of involved workers, and a much improved overall ecological footprint.

Therefore, RMA-based coatings are clearly superior to any other two-component paint and varnish, particularly to polyurethane paints and varnishes that are the current qualitative top-of-line. Indeed, the possibility to obtain highly resistant, very clear coatings of any gloss without having to employ isocyanates, melamine or formaldehyde is a very strong selling point for these systems as wood coatings.

Another alternative, radiation curable systems, is not accessible to the artisans or smaller companies that make such a large part of the wood coating industry, but only to large industries, and even then mostly only for flat pieces.

However, as discussed in the cited patents, RMA chemistry is very sensitive to interaction with or presence of any acidic species either in the formulations themselves or deriving from the substrate, or even CO₂ from the air in extreme cases (see for example EP2556106B1 par. [0010]). Although a variety of schemes have been devised to reduce the impact of acidic species, none are without negative side effects. In particular, any scheme relying on an excess of base catalyst to swamp out the inhibiting impact of any possible acid species is going to lead to the following drawbacks:
- many instances where excess catalyst remains unreacted, with effects on stability and look of the coating
- other instances where reaction of the catalyst with the acidic species forms in itself compounds with unwanted esthetic impact or not under control (unwanted colors, precipitates, gas incorporation and so on)
- other instances, finally, where the acid species is added to serve an esthetic or functional role, and reaction of the excess catalyst with it negates such functionality.

This is a problem especially felt for wood coatings, where
- the look, transparency, clearness, color, feel and smoothness of a varnish are most important
- the naturally occurring compounds in the different wooden substrates can be themselves troublesome in their interaction with RMA-based coatings
- tinting of wood with non-filming stains is a very important technique, and the stability of such mechanically weak colored coatings must be ensured by the application of overlaid transparent coats
- the wood surface often presents wildly varying composition, for example the inside of a pore being very different than the wood durum, with resulting esthetic inhomogeneity due to different reactions of the latent base catalyst with acid species present therein.

On the other hand, insulating primers known in the art all present their own sets of drawbacks when used as layers between the wooden substrate and the RMA-based coatings. Those that are solvent borne are either based on physically-drying polymers with a simple blocking action, or on tightly reticulating isocyanates or formaldehyde-based systems. The former ones are not effective enough, not impeding completely the cross-talk between acidic species in the substrate and the RMA-based coating layers. Use of the latter ones would, of course, negate one of the main advantages of the RMA-based system, namely the absence of isocyanates, polyisocyanates, melamine or formaldehyde.

The insulating primers that are waterborne, mainly based on oxides and cationic species meant to react with acidic mobile species in the wooden support, are also not effective in completely impeding cross-talk with the RMA-based layers, in addition to having other negative side effects such as forcing an extra sanding step of the substrate or being colored and covering, hence not usable in transparent cycles.

WO2007130849 discloses a wood coating composition comprising: 10-12 wt% of a film-forming polymer such as an acrylate; a solvent such as water or an organic solvent; and 0,1-2 wt% of an amine silane.

One aim of the present invention is to overcome the above disclosed drawbacks in general for any wooden or cellulosic substrate and, more broadly, for any substrate presenting acidic groups on its surface.

Specifically, an aim of the present invention is that of identifying a multilayer coating composition comprising an RMA-based paint formulation able to provide coated wooden surfaces with excellent adhesion between the layers and to the substrate and high mechanical and chemical resistance.

A further aim of the present invention is that of identifying a multilayer coating composition able to provide coated wooden surfaces with a controlled, homogeneous look and pleasant feel to the touch, without unwanted changes in color or appearance of the substrate.

Yet another aim of the present invention is that of identifying a multilayer coating composition for wooden substrates guaranteeing long pot life at the same time as it guarantees very short drying and cross-linking times.

A further aim of the present invention is that of identifying a multilayer coating composition for wooden substrates achieving all of the previously-listed aims without the use of isocyanates, polyisocyanates, melamine or formaldehyde anywhere in the value chain, that is neither in the final products, nor on their application or preparation or the synthesis of their components.

The invention is defined in the claims.

Object of the present invention is an insulating composition a) suitable for forming at least a layer of a multilayer coating composition, comprising at least one filming agent, at least one solvent and at least one silane or siloxane or their mixtures and, optionally, one or more amines, where the total amount of said at least one silane or siloxane or their mixtures and of the one or more optional amines varies from 2% to 30% by weight, preferably from 5% to 20% by weight relative to the total weight of the insulating composition.

A further object of the present invention is the use of said insulating composition for the coating of a substrate, preferably of a substrate chosen among a surface and a three-dimensional object, more preferably made of wood or wood-based material, optionally surfaced by impregnated paper or cellulosic material, or made in other material presenting acidic groups on its surface.

It is also object of the present invention a kit comprising at least the following compositions suitable for the formation of a multilayer coating
a) an insulating composition as defined above
b) an RMA-based paint or varnish cross-linkable composition.

Another object of the present invention is the use of the above-defined kit for the coating of a substrate, preferably of a substrate chosen among a surface and a three-dimensional object, more preferably made of wood or wood-based material, optionally surfaced by impregnated paper or cellulosic material, or made in other material presenting acidic groups on its surface.

Yet another object of the present invention is a method for the coating of a substrate, such as a surface or a three-dimensional object, with the above-defined kit, comprising the following steps
i. application on the surface or object to be coated of at least one layer of the insulating composition a)
ii. drying of the insulating composition layer a) applied in step i., by keeping at ambient conditions or using drying means;
iii. application of at least one layer of the RMA-based paint or varnish cross-linkable composition b) to the parts of the substrate coated with the insulating composition a) dried in step ii.;
iv. curing of the layer applied in step iii.

Moreover, the present invention provides a three-dimensional object at least partially coated, or a surface at least partially coated, obtained via the above-described method.

Unless differently specified, in the present text percentages and amounts of a component in a mixture or composition refer to the weight of such component relative to the total weight of the mixture or composition.

Unless differently specified, in the present text the indication that a composition "comprises" one or more components or substances means that other components or substances can also be present, in addition to that, or those, specifically named.

Unless differently specified, in the present text a range of values specified for a quantity, for example the weight content of a component, includes the lower and upper limits. For example, if the weight or volume content of component A is stated as "from X to Y" or "between X and Y", where X and Y are numerical values, A can be X or Y or any of the intermediate values.

In the present text, the definitions "coating composition based on Real Michael Addition" and "RMA-based coating composition" are alternative definitions representing the same coating composition.

In the present text, the words "layer" and "layers" define the result of the successive application of aliquots of coating compositions, that can remain wholly distinct after drying and/or curing or combine so as to become indistinguishable.

The present invention includes the use of an insulating composition specifically designed to be on the one hand impervious to acid species, like wood tannins or stain pigments, on the other hand perfectly compatible with and stable toward the one or more overlaying RMA coats. Such insulating composition is also formulated, like all components of an RMA-based coating cycle, without isocyanates, polyisocyanates, melamine or formaldehyde.

The overall result of combining such an insulating composition with other RMA-based layers is to obtain all the above-described features of RMA-based coatings on every wooden substrate with complete control of homogeneous color and adhesion.

In the context of the present invention, "Real Michael Addition- or RMA-based coating" indicates a coating obtained using the compositions described in EP2556106B1, EP2556108B1, EP2764038B1, EP2985308B1, EP2984133B1, EP3283583A1, EP3283556A1, EP3283557A1 and EP3283558A1, and in the documents there referenced.

In one embodiment, the present invention discloses an insulating composition a) comprising at least one film-forming agent, at least one solvent and at least one silane or siloxane or their mixtures and, optionally, one or more amines, where the total amount of said at least one silane or siloxane or their mixtures and of the one or more optional amines varies from 2% to 30% by weight, preferably from 5% to 20% by weight relative to the total weight of the insulating composition.

Surprisingly, the present invention solves the above indicated technical problems by the combination of said specific insulating composition a) with the RMA-based cross-linkable coating compositions. In the absence of the specific insulating composition a), or with different insulating compositions, the coatings produced fail to fulfil the expected performance requirements in one or more aspects, and are unsuitable for industrial applications as practiced in the wood or wood derivatives coating industry.

The insulating composition a) can be applied by spray, brush, roll, rag, immersion, flow, curtain, vacuum, sponge or in any other way known in the art. One or more layers of it can be applied, being equal or different in composition, with or without particular drying, sanding or other treatments known in the art between one layer and the following and/or before application of the RMA-based coating composition b). The insulating composition a) comprises at least the following components:
- at least one film-forming agent
- at least one compound chosen from silanes or siloxanes or their mixtures
- optionally, one or more amines
- at least one solvent.

Preferably, the said at least one film-forming agent in the insulating composition a) can be selected among vinyl acrylate, cellulose nitrate, polyvinyl alcohol, polyvinyl ether, polyvinyl ester, among which preferably polyvinyl acetate, cellulose acetate butyrate, cellulose acetate propionate, polyvinyl pyrrolidone, acrylates, methacrylates, acrylamides, their copolymers or any other film-forming agent known in the art.

Particularly preferred are cellulose acetate propionate and cellulose acetate butyrate and their copolymers, that is propylic and butyric esters of cellulose, a linear polysaccharide, like, as a non-limiting example, the CAB 381-x products from Eastman Chemicals (cellulose acetate butyrate).

Said at least one film-forming agent is present in the insulating composition a), preferably but without limitation, in an amount ranging of from 0.1% to 20% by weight, more preferably of from 0.2% to 19 % by weight, and most preferably of from 0.5% to 5% by weight relative to the total weight of composition a).

Preferably, the silane in insulating composition a) according to the present invention has the following general formula

Si(R₁X₁)(R₂X₂)(R₃X₃)(R₄X₄) (I)

wherein R₁, R₂, R₃ and R₄, equal or different one from the other in any combination, are selected among H or saturated or unsaturated, linear or branched alkyl, aryl, polyester, polyether, polycarbonate, polyurethane, polyacrylic, methacrylic or polysilyl chains with number of chain atoms between 1 and 18, and X₁, X₂, X₃ and X₄, equal or different one from the other in any combination, present only when the correspondent R₁, R₂, R₃ and R₄ is different from H, are selected between H and a reactive group such as cyano, isocyano, alcohol, carbonyl, carboxyl, epoxy, amine, amide, vinyl, acryl, methacryl, chloride, bromide, iodide, nitride, phosphate, silane, siloxane, and/or
the siloxane in insulating composition a) according to the present invention has the following general formula

X₁R₁Si(OR₂X₂)(OR₃X₃)(OR₄X₄) (II)

wherein
R₁, R₂, R₃ and R₄, equal or different one from the other in any combination, are selected among H or saturated or unsaturated, linear or branched alkyl, aryl, polyester, polyether, polycarbonate, polyurethane, polyacrylic, methacrylic or polysilyl chains with number of chain atoms between 1 and 18, and X₁, X₂, X₃ and X₄, equal or different one from the other in any combination, present only when the correspondent R₁, R₂, R₃ and R₄ is different from H, are selected between H or a reactive group such as cyano, isocyano, alcohol, carbonyl, carboxyl, epoxy, amine, amide, vinyl, acryl , methacryl, chloride, bromide, iodide, nitride, phosphate, silane, siloxane and/or
the amine has the following general formula

N(R₁X₁)(R₂X₂)(R₃X₃) (III)

wherein
R₁, R₂ and R₃, equal or different one from the other in any combination, are selected among H or saturated or unsaturated, linear or branched alkyl, aryl, polyester, polyether, polycarbonate, polyurethane, polyacrylic, methacrylic or polysilyl chains with number of chain atoms between 1 and 18, and X₁, X₂ and X₃, equal or different one from the other in any combination, present only when the correspondent R₁, R₂ or R₃ is different from H, are selected between H or a reactive group such as cyano, isocyano, alcohol, carbonyl, carboxyl, epoxy, amine, amide, vinyl, acryl, methacryl, chloride, bromide, iodide, nitride, phosphate, silane, siloxane.

Particularly preferred are amines in which the amine functionality is present along with a silane or siloxane functionality, that is in which at least one among X₁, X₂ and X₃ in formula (III) is a silane or siloxane.

In the insulating composition a) of the present invention, the total amount of said at least one silane or siloxane or their mixtures and of the one or more optional amines varies from 2% to 30% by weight, preferably from 5% to 20% by weight relative to the total weight of the insulating composition a). Preferably, each of the said at least one silane or siloxane or their mixtures and of the one or more optional amines is present in an amount ranging of from 0.1% to 10% by weight, more preferably of from 0.5% to 5% by weight relative to the total weight of the insulating composition a).

The insulating composition a) of the invention may additionally comprise, for example, other binders or polymers as known in the art, which can be, by their chemical nature, acrylates, methacrylates, vinyls, carbonates, olefins, urethanes, ureas, alkyds, esters, ethers, silicones, phosphates, aminoacids, amides or fluorinated compounds, under the guise of molecules or polymers of any molecular weight, copolymers combining any of the above or a mixture of any of the above.

The insulating composition a) of the invention may additionally comprise one or more additives selected among coalescents, pigments, colorants, organic or inorganic fillers, dispersants, surface-active agents, organic or inorganic matting agents, organic or inorganic rheology modifiers, slip agents, leveling agents, wetting agents, catalysts, antifoam agents, stabilizers, silicones, waxes, polymer particles, UV absorbers and any other additive employed in the art.

The components of insulating composition a) can be combined also at the time of application on the substrate, therefore formulations are possible in which the various components are supplied as separate parts. For example, but without limitation, it can be advantageous, for in-can stability, to separate the film-forming agent from the silane/siloxane/amine components, or to separate the silane/siloxane from the amine.

In one embodiment, the present invention relates to a kit comprising at least the following compositions suitable for the formation of a multilayer coating
a) an insulating composition as defined above, comprising at least one film-forming agent, at least one solvent and at least one silane or siloxane or their mixtures and, optionally, one or more amines
b) an RMA-based paint or varnish cross-linkable composition.

In a preferred embodiment of the present invention, said kit includes additionally at least one composition c) comprising a stain.

The optional composition c) can be any of those known and used in the art, and can be indifferently waterborne or solvent borne, pigment or colorant-based, applied by spray, brush, roll, rag, immersion, flow, curtain, sponge, vacuum or in any other way known in the art.

In general, optional composition c) comprising a stain, is a dye solution, a pigment dispersion or a combination thereof, in a solvent that can be water, an organic solvent or their combination, optionally in the presence of other components including dispersing agents, wetting agents, rheological agents, leveling agents, film-forming agents, antifoam agents, agents for the protection of the composition or the substrate, pH or ionic-strength modifiers, and any other additive known in the art.

The composition c) is primarily intended to change and make more uniform the color or the wooden substrate. It is applied before the insulating composition a), one or more layers of it can be applied, being equal or different in composition, with or without particular drying, sanding or other treatments known in the art between them and/or before application of the insulating composition a).

Composition c) can be applied, in various coating cycles, also after the application of insulating composition a) and of paint or varnish composition b).

In a preferred embodiment, in the kit according to the invention, the paint or varnish cross-linkable composition b) comprises
b1) at least one component with at least 2 acidic protons (C-H donor groups) in activated methylene or methyne groups;
b2) at least one component with at least 2 unsaturations (C=C acceptor groups), where said C-H donor groups of component b1) and said C=C acceptor groups of components b2) can be present in the same molecule;
b3) at least one base or latent base;
b4) optionally, at least one component able to regulate the reactivity rates, such as a component comprising an X-H group where X is N, P, O, S or where X is C in a methyl group, said component b4) having acidity, measured as pKa in water, lower by at least one unit than the acidity of the C-H group in component b1), preferably said component b4) having pKa ranging from 7 to 13, and most preferably where b4) is selected among substituted and unsubstituted 1,2,4 triazole and 1,2,3 triazole, succinimide, etosuccimide, 5, 5-dimethylhydantoin, benzotriazole, benzene sulfonamide, nitromethane, isatine, uracil, 4-nitro-2-methylimidazole, ethyl acetoacetate and phenol;
b5) optionally, at least one solvent.

As a non limiting example, the paint and varnish cross-linkable composition b) comprises:
b1) at least one component with at least 2 acidic protons (C-H donor groups) in activated methylene or methyne groups, for example those described in EP2556106B1; particularly preferred are malonates (R₁OOCCH₂COOR₂), acetoacetates (CH₃COCH₂COOR₃) and the polymers, particularly polyesters, containing such group;
b2) at least one component with at least 2 activated unsaturations (C=C acceptor groups), for example those described in EP2556106B1 (components b1) and b2) can be combined in a same b1)-b2) molecule); particularly preferred are all unsaturated acrylic and methacrylic monomers, oligomers and polymers and the unsaturated polyesters employed, for example, in coating compositions cured by irradiation or oxidatively;
b3) at least one base or latent base, for example the latent base catalysts described in EP2556106B1 or the salts described in EP2984133B1; particularly preferred are the alkyl carbonates described in EP2556106B1;
b4) optional component(s) useful to regulate the reactivity rates, for example those described in paragraphs 0027 to 0033 of EP2764038B1, that is components comprising an X-H group where X is N, P, O, S or where X is C in a methyl group, said component b4) having acidity, measured as pKa in water, lower by at least one unit than the acidity of the C-H group in component b1), preferably said component b4) having pKa ranging from 7 to 13, and most preferably wherein b4) is selected among substituted and unsubstituted 1,2,4 triazole and 1,2,3 triazole, succinimide, etosuccimide, 5, 5-dimethylhydantoin, benzotriazole, benzene sulfonamide, nitromethane, isatine, uracil, 4-nitro-2-methylimidazole, ethyl acetoacetate and phenol;
b5) optional solvents.

The cross-linkable coating composition b), based on Real Michael Addition (RMA) chemistry, can be applied by spray, brush, roll, rag, immersion, flow, curtain, sponge, vacuum or in any other way known in the art. One or more layers of it can be applied, being equal or different in composition, with or without drying, sanding or other treatments known in the art between them and/or after all the coating has been applied.

The components of the RMA-based composition b) can be combined at the time of application, therefore formulations in which the various components are delivered as separate parts are possible. In particular, it is often advantageous to separate component(s) b3), base(s) or latent base(s), from component(s) b1), carrying C-H donor groups, until the time of application for longest shelf life of the system in cans.

The solvents employable in the RMA-based cross-linkable compositions b), just as in the insulating composition a) of the invention comprise water, benzene, toluene, xylene and any other aromatic solvents, aliphatic olefins, ethyl acetate, propyl acetate, butyl acetate, isobutyl acetate and any other acetates, acetone, methyl ethyl ketone and any other ketones, ethanol, propanol, isopropanol and any other alcohol, any glycol and glycol ether, pyrrolidone and substituted pyrrolidones and any other solvent used in the art or any combination thereof.

Particularly preferred are alcohols, glycols and glycol ethers, acetates and ketones.

The RMA-based cross-linkable composition b) in the kit of the invention may additionally comprise one or more of the coalescents, pigments, colorants, organic or inorganic fillers, dispersants, surface-active agents, organic or inorganic matting agents, organic or inorganic rheology modifiers, slip agents, leveling agents, wetting agents, catalysts, antifoam agents, stabilizers, silicones, waxes, polymer particles, UV absorbers and any other additive employed in the art.

In one embodiment of the invention, the present invention concerns also the use of the above-described kit to apply a coating onto a substrate, preferably a surface or a three-dimensional object, made of wood or a cellulosic material or any other material presenting acid groups on the surface.

In another embodiment, the present invention provides a method for coating a substrate, such as a surface or a three-dimensional object, with a kit as described above, wherein said method comprises the following steps:
i. application on the surface or object to be coated of at least one layer of the insulating composition a)
ii. drying of the insulating composition layer a) applied in step i., by keeping at ambient conditions or using drying methods
iii. application of at least one layer of the RMA-based cross-linkable paint or varnish composition b) to the parts of the substrate coated with the insulating composition a) dried in step ii.;
iv. curing of the layer applied in step iii.

Drying of the individual layers and of the overall coating can be achieved by simple exposure to ambient conditions, i.e. exposure to air and room temperature, namely from about 20°C to about 30°C, oven drying, forced ventilation, IR lamp exposure or any other method known in the art. Because of the presence of active unsaturated component(s), they can also be added and combined curing processes stimulated by radiation, with or without the addition of photoinitiator compounds, or of oxidative cross-linking, with or without the addition of siccative or synergist catalysts and/or the addition of peroxides, as known in the art.

According to the present invention, said multilayer coating composition can be applied as coating to a substrate comprising a cellulosic material or wood by a method of preparation of a coating based on said coating compositions, comprising the following steps:
- the multilayer coating composition of the inventions is applied to a substrate layer by layer in the appropriate sequence, the insulating composition a) being applied always before the RMA-based cross-linkable composition b); and
- the individual layers of the multilayer coating composition film or coalesce before the successive one is applied; and
- those individual layers of composition a), b) or optionally c) that can undergo crosslinking, can crosslink before or after the successive layer is applied

In one preferred embodiment of the invention, one or more layers, more preferably two or more layers, of stain are applied before the application of one or more layers of insulating composition a) of the invention and one or more layers of RMA-based cross-linkable composition b) of the invention.

In one preferred embodiment of the invention, no stain is applied before the application of one or more layers of insulating composition a) of the invention and one or more layers of RMA-based cross-linkable composition b) of the invention.

In another preferred embodiment of the invention, two or more layers of the insulating composition a) of the invention and one or more layers of RMA-based cross-linkable composition b) of the invention are applied.

In a further preferred embodiment of the invention, the layers of RMA-based cross-linkable composition b) of the invention have the same composition.

In a yet further embodiment of the invention, at least two layers of RMA-based cross-linkable composition b) of the invention are applied, in which at least one layer is different from the other(s) for at least one component.

In a yet further embodiment of the invention, more than two layer of RMA-based cross-linkable composition b) are applied, of which at least two have the same composition and at least one a different composition by at least one component.

It is an embodiment of the present invention a three-dimensional object or a surface at least partially coated obtainable via such methods. Typical examples of objects and surfaces that can be usefully coated according to the present invention are: furniture and furniture components, furniture complements, flooring, panels and paneling, wall coverings, wainscots and sidings, windows and doors, visible wooden structural elements, skirting and baseboards, caskets, wooden inserts and elements for cars and other vehicles, interiors and exteriors of ships and boats, and so on.

The following examples are provided to illustrate some embodiments of the invention, without limiting in any way its scope.

All the example coating formulations were applied on oak, a type of wood showing clearly defined, open pores and containing a significant amount of mobile chemical species, particularly tannins.

The general scheme of the coating compositions used in the examples (where examples 1-3, 5 and 7 are comparative, and examples 4 and 6 are according to the invention), and the application sequence of the coating compositions, are as follows

**Table 1 - example coating cycles and relative esthetic evaluation**

| example | stain | Insulating layer(s) | RMA-based composition | esthetic evaluation |
|---|---|---|---|---|
| 1 | no | None | 2 layers as described in text | DARKENING |
| 2 | no | WB (insulating waterborne) | | DARKENING |
| 3 | no | NCO-based insulating composition | | NATURAL COLOR |
| 4 | no | Insulating composition according to the invention | | NATURAL COLOR |
| 5 | yes | None | | GRAYING |
| 6 | yes | Insulating composition according to the invention | | ORIGINAL STAIN COLOR |
| 7 | yes | Insulating composition with the components of the invention but below the concentration limits of the invention | | First RMA-based layer is removed when the second RMA-layer is applied |

The compositions of the coating products of the examples are given below; concentrations are always given in weight percentages relative to total composition weight.

The stain, when used, was applied by rag, that is by dabbing with pressure a rag soaked in the stain onto the substrate, letting the composition penetrate the substrate, and removing any excess liquid. The overcoats were then applied after 4 hours, to allow for complete drying and evaporation of the solvent.

The stain of the examples is a normal commercial formulation of the Milesi CIT series, comprised of the following components:
- 8% pigments
- 88% glycol ether solvents
- 3% polyester binders
- 1% dispersants and rheological agents.

The insulating compositions were all applied by spray coating in an amount of 100 g/m². Before the application of the overcoats, a sufficient time was always allowed for drying and filming, specifically 2 hours after the application of the WB composition (example 2) and after the application of the NCO-based composition (example 3). Advantageously, the overcoats can be applied just 1 hour after the application of the inventive composition (examples 4 and 6).

The WB insulating composition comprises:
- 60% Neocryl® XK30 from DSM, a "stain locking" resin based on acrylic copolymer emulsion
- 4% Texanol® from Eastman Chemical (isobutyrric acid ester with 2,2,4-trimethyl-1,3-pentandiol), cosolvent and coalescent
- water to 100%
- pH adjusted to 7 with mono ethanolamine.

The NCO-based insulating composition was also a commercially available product, Ilva TF23, a 2K solvent borne PU product. It comprises
- 14% polyisocyanate binders based on TDI, toluene diisocyanate
- 9% hydroxylated polyester binders based on phthalic anhydride and trimethylol propane with fatty acids
- 77% solvents

The insulating composition according to the present invention of examples 4 and 6 comprises
- 92% butyl acetate solvent
- 4% cellulose acetate butyrate
- 4% gamma-aminopropyl triethoxysilane

The insulating composition of example 7 comprises
- 95,6% butyl acetate solvent
- 4% cellulose acetate butyrate
- 0.4% gamma-aminopropyl triethoxysilane

The RMA-based composition employed in the examples was modeled on the formulation of example 9 of cited patent EP2556108B1. A formulation with a solid content of 75% was prepared by sequential mixing of
- 100g of a solution of polyesters comprising malonates
- 30g of Dowanol® PMA (1-methoxy-2-propanol)
- 6g of tetrabutylammonium bicarbonate
- 50g of TMPTA (trimethylolpropane triacrylate).

The catalyst concentration was 0,029 meq/g of solids.

A first layer was spray coated with a laydown of 80 g/m²; after 1 hour light sanding was effected with 320 grit sand paper, followed by application of a second layer, spray coated again at 80 g/m². The overall applied composition was as follows
- 34% malonate polyester
- 19% trimethylol propane triacrylate
- 1% tetrabutylammonium bicarbonate
- 35% butyl acetate
- 11% primary alcohol.

In the attached figures, one can see examples of wood not coated, coated in accordance to the present invention, and coated as in the state of the art, and specifically:
FIGURE 1: oak: 1A) area coated without insulating layer (example 1 of Table 1), 1B) area not coated and 1C) area coated using the insulating composition of the invention (example 4 in Table 1);
FIGURE 2: oak: 2A) area stained and coated without insulating layer (example 5 of Table 1) and 2B) area stained and coated using the insulating composition of the invention (example 6 in Table 1).

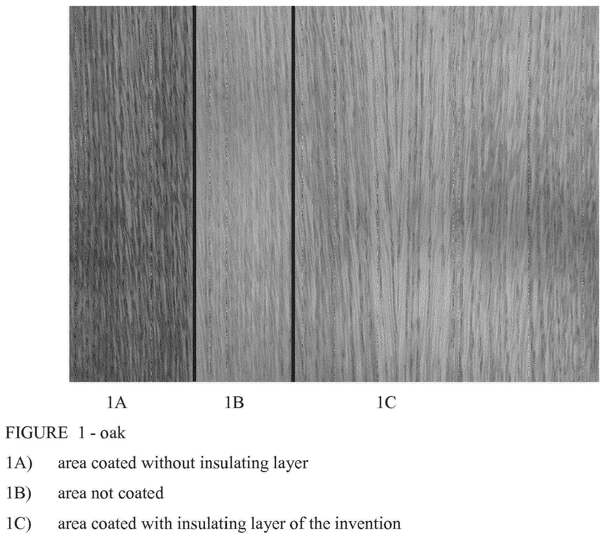

The effect of the interaction between wood-contained tannins and the RMA-based coatings is evidenced in figure 1 showing an oak-veneered panel coated on one side (1A) with cycle of example 1 of Table 1, on the other side (1C) with cycle of example 4 of Table 1, whereas the central band (1B) was not coated in order to provide a comparative sample.

Therefore, the left (1A) and right (1C) ends have been coated with identical cycles not including a stain, differing only in that the cycle of example 1 on the left (1A) is without insulating composition, whereas the cycle of example 4 on the right (1C) includes the insulating composition according to the present invention.

It can be clearly noticed how the area (1A) coated with cycle of example 1 is much darker than the area (1C) coated with cycle of example 4, that preserves the natural color of the wood with a good enlivening.

These results show that the use of the insulating composition according to the present invention makes it possible to keep wood color chromatically unchanged by coating.

Overall the esthetic results of the coating cycles of the example are summarized in the fifth column of Table 1. It can be seen that the insulating composition according to the present invention achieves the same insulating efficacy of the state-of-the art NCO-based insulating composition without, of course, having to include isocyanates or polyisocyanates, and, therefore, making it possible to fully enjoy the health and safety improvements of RMA-based coatings.

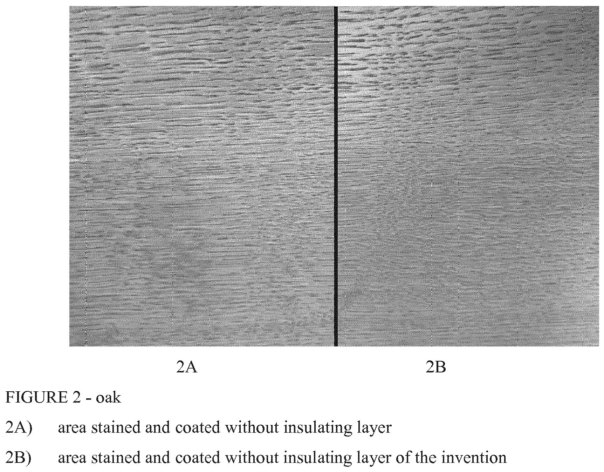

The effect of the interaction between wood-contained tannins and the RMA-based cross-linkable coatings in the presence of a stain is evidenced in figure 2 showing an oak-veneered panel coated on one side (2A) with cycle of example 5 of Table 1 (comparative), on the other side (2B) with cycle of example 6 of Table 1 (according to the present invention). Therefore, the left (2A) and right (2B) halves are coated with identical cycles including the optional stain, differing only in that the cycle of example 5 (on the left, 2A) is without insulating composition, whereas the example of example 6 (on the right, 2B) includes the insulating composition according to the present invention.

It can be clearly noticed how the area (2A) coated with cycle of example 5 is much grayer and dull than the area (2B) coated with cycle of example 6, for the presence of a grey or black component that makes the color more neutral, than the area (2B) coated with cycle of example 6: in this case, the reaction between tannins and RMA-based composition led to an evident shift in stain color.

Finally, when an insulating composition contains the same components of the insulating composition according to the present invention but contains the silane/siloxane and optional amine in concentrations lower than those indicated in the composition according to the present invention, is applied over a stain as in example 7, a strange phenomenon is observed.

Indeed, even though the first layer of RMA-based composition appears to adhere and cross-link perfectly, when a second layer of RMA-based composition is applied, the adhesion of the first layer gets lost. Such phenomenon becomes apparent as an esthetic defect, especially tactile (the surface becoming rough to the touch), randomly diffused over the coated surface or piece.

Such phenomenon makes "diluted" insulating compositions absolutely unsuitable for industrial use.

## Claims

1. A kit comprising at least the following compositions suitable for the formation of a multilayer coating
a) an insulating composition suitable for forming at least a layer of a multilayer coating composition, comprising at least one filming agent, at least one solvent and at least one silane or siloxane or their mixtures and, optionally, one or more amines, wherein the total amount of said at least one silane or siloxane or their mixtures and of the one or more optional amines varies of from 2% to 30% by weight, preferably of from 5% to 20% by weight relative to the total weight of the insulating composition;
and
b) a Real Michael Addition (RMA)-based paint or varnish cross-linkable composition
and, optionally, at least
c) one composition comprising a stain.

2. The kit according to the previous claim, wherein the film-forming agent of the insulating composition a) is selected among vinyl acrylate, cellulose nitrate, polyvinyl alcohol, polyvinyl ether, polyvinyl ester, polyvinyl acetate, cellulose acetate butyrate, cellulose acetate propionate, polyvinyl pyrrolidone, acrylates, methacrylates, acrylamides, their copolymers or mixtures thereof.

3. The kit according to any of the previous claims, wherein
the silane of the insulating composition a) has the following general formula
Si(R₁X₁)(R₂X₂)(R₃X₃)(R₄X₄) (I)
wherein
R₁, R₂, R₃ and R₄, equal or different one from the other in any combination, are selected among H or saturated or unsaturated, linear or branched alkyl, aryl, polyester, polyether, polycarbonate, polyurethane, polyacrylic, methacrylic or polysilyl chains with number of chain atoms between 1 and 18, and X₁, X₂, X₃ and X₄, equal or different one from the other in any combination, present only when the correspondent R₁, R₂, R₃ and R₄ is different from H, are selected between H or a reactive group such as cyano, isocyano, alcohol, carbonyl, carboxyl, epoxy, amine, amide, vinyl, acryl, methacryl, chloride, bromide, iodide, nitride, phosphate, silane, siloxane, and/or
the siloxane of the insulating composition a) has the following general formula
X₁R₁Si(OR₂X₂)(OR₃X₃)(OR₄X₄) (II)
where
R₁, R₂, R₃ and R₄, equal or different one from the other in any combination, are selected among H or saturated or unsaturated, linear or branched alkyl, aryl, polyester, polyether, polycarbonate, polyurethane, polyacrylic, methacrylic or polysilyl chains, with number of chain atoms between 1 and 18, and X₁, X₂, X₃ and X₄, equal or different one from the other in any combination, present only when the correspondent R₁, R₂, R₃ and R₄ is different from H, are selected berween H or a reactive group such as cyano, isocyano, alcohol, carbonyl, carboxyl, epoxy, amine, amide, vinyl, acryl, methacryl, chloride, bromide, iodide, nitride, phosphate, silane, siloxane, and
the amine of the insulating composition a) has the following general formula
N(R₁X₁)(R₂X₂)(R₃X₃) (III)
wherein
R₁, R₂ and R₃, equal or different one from the other in any combination, are selected among H or saturated or unsaturated, linear or branched alkyl, aryl, polyester, polyether, polycarbonate, polyurethane, polyacrylic, methacrylic or polysilyl chains with number of chain atoms between 1 and 18, and X₁, X₂ and X₃, equal or different one from the other in any combination, present only when the correspondent R₁, R₂ or R₃ is different from H, are selected between H or a reactive group such as cyano, isocyano, alcohol, carbonyl, carboxyl, epoxy, amine, amide, vinyl, acryl, methacryl, chloride, bromide, iodide, nitride, phosphate, silane, or siloxane.

4. The kit according to any of the previous claims, wherein each of the said at least one silane or siloxane or their mixtures and of the one or more optional amines of the insulating composition a) is present in an amount ranging of from 0.1% to 10% by weight, more preferably of from 0.5% to 5% by weight relative to the total weight of the insulating composition.

5. The kit according to any of the previous claims, wherein the film-forming agent of the insulating composition a) is present in an amount ranging of from 0.1% to 20% by weight, more preferably of from 0.2% to 19 % by weight, and most preferably of from 0.5% to 5% by weight relative to the total weight of the insulating composition.

6. The kit according to any of the previous claims, in which the RMA-based paint or varnish cross-linkable composition b) comprises:
b1) at least one component with at least 2 acidic protons (C-H donor groups) in activated methylene or methyne groups;
b2) at least one component with at least 2 unsaturations (C=C acceptor groups), where said C-H donor groups of component b1) and said C=C acceptor groups of component b2) can be present in the same molecule;
b3) at least one base or latent base;
b4) optionally, at least one component able to regulate the reactivity rates, such as a component comprising an X-H group where X is N, P, O, S or where X is C in a methyl group, said component b4) having acidity, measured as pKa in water, lower by at least one unit than the acidity of the C-H group in component b1), preferably said component b4) having pKa ranging from 7 to 13, and most preferably wherein component b4) is selected among substituted and unsubstituted 1,2,4 triazole and 1,2,3 triazole, succinimide, etosuccimide, 5, 5-dimethylhydantoin, benzotriazole, benzene sulfonamide, nitromethane, isatine, uracil, 4-nitro-2-methylimidazole, ethyl acetoacetate and phenol;
b5) optionally, at least one solvent.

7. The kit according to any of the previous claims, in which the solvent in the insulating composition a) and/or in the RMA-based paint or varnish cross-linkable composition b) comprises or consists of water, benzene, toluene, xylene and any other aromatic solvents, aliphatic olefins, ethyl acetate, propyl acetate, butyl acetate, isobutyl acetate and any other acetates, acetone, methyl ethyl ketone and any other ketones, ethanol, propanol, isopropanol and any other alcohol, any glycol and glycol ether, pyrrolidone and substituted pyrrolidones and mixtures thereof.

8. Use of the kit according to any of the previous claims for the coating of a substrate, preferably of a substrate such as a surface or a three-dimensional object, made of wood or wood-based material, optionally surfaced by impregnated paper or cellulosic material, or made in other material presenting acidic groups on its surface.

9. Use of the kit according to claim 8, wherein the insulating composition a) is applied for the coating of a substrate, preferably of a substrate chosen among a surface and a three-dimensional object, more preferably made of wood or wood-based material, optionally surfaced by impregnated paper or cellulosic material, or made in other material presenting acidic groups on its surface.

10. A method for coating a substrate, such as a surface or a three-dimensional object, with a kit according to any of the previous claims 1-7, comprising the following steps:
i. application on the surface or object to be coated of at least one layer of the insulating composition a);
ii. drying of the insulating composition layer a) applied in step i., by keeping at ambient conditions or using drying methods;
iii. application of at least one layer of the RMA-based paint or varnish composition b) to the parts of the substrate coated with the insulating composition a) dried in step ii.;
iv. curing of the layer applied in step iii.

11. A three-dimensional object at least partially coated or a surface at least partially coated, obtained according to the method of claim 10.

## Patentansprüche

1. Set, umfassend mindestens die folgenden Zusammensetzungen, die zur Bildung einer mehrschichtigen Beschichtung geeignet sind
a) eine isolierende Zusammensetzung, die zur Bildung von mindestens einer Schicht einer mehrschichtigen Beschichtungszusammensetzung geeignet ist, umfassend mindestens einen Filmbildner, mindestens ein Lösungsmittel und mindestens ein Silan oder Siloxan oder Mischungen davon und optional ein oder mehrere Amine, wobei die Gesamtmenge des mindestens einen Silans oder Siloxans oder der Mischungen davon und des einen oder der mehreren optionalen Amine von 2 bis 30 Gew.-%, vorzugsweise von 5 bis 20 Gew.-% relativ zum Gesamtgewicht der isolierenden Zusammensetzung variiert;
und
b) eine Real-Michael-Addition-(RMA)-basierte, vernetzbare Farb- oder Lackzusammensetzung
und optional mindestens
c) eine Zusammensetzung, umfassend einen Farbstoff.

2. Set nach dem vorstehenden Anspruch, wobei der Filmbildner der isolierenden Zusammensetzung a) ausgewählt ist aus Vinylacrylat, Cellulosenitrat, Polyvinylalkohol, Polyvinylether, Polyvinylester, Polyvinylacetat, Celluloseacetobutyrat, Celluloseacetopropionat, Polyvinylpyrrolidon, Acrylate, Methacrylate, Acrylamide, deren Copolymere und Mischungen davon.

3. Set nach einem der vorstehenden Ansprüche, wobei das Silan der isolierenden Zusammensetzung a) folgende allgemeine Formel aufweist
Si(R₁X₁)(R₂X₂)(R₃X₃)(R₄X₄) (I)
wobei
R₁, R₂, R₃ und R₄ - gleich oder voneinander verschiedenen in einer beliebigen Kombination - ausgewählt sind aus H oder gesättigten oder ungesättigten, linearen oder verzweigten Alkyl-, Aryl-, Polyester-, Polyether-, Polycarbonat-, Polyurethan-, Polyacryl-, Methacryl- oder Polysilylketten mit einer Anzahl von Kettenatomen, die zwischen 1 und 18 liegt, und X₁, X₂, X₃ und X₄ - gleich oder voneinander verschiedenen in einer beliebigen Kombination - die nur dann vorliegen, wenn das entsprechende R₁, R₂, R₃ und R₄ verschieden sind von H ist, ausgewählt sind aus H oder einer reaktiven Gruppe, wie Cyano, Isocyano, Alkohol, Carbonyl, Carboxyl, Epoxy, Amin, Amid, Vinyl, Acryl, Methacryl, Chlorid, Bromid, Iodid, Nitrid, Phosphat, Silan, Siloxan, und/oder
das Siloxan der isolierenden Zusammensetzung a) folgende allgemeine Formel aufweist
X₁R₁Si(OR₂X₂)(OR₃X₃)(OR₄X₄) (II)
wobei
R₁, R₂, R₃ und R₄ - gleich oder voneinander verschiedenen in einer beliebigen Kombination - ausgewählt sind aus H oder gesättigten oder ungesättigten, linearen oder verzweigten Alkyl-, Aryl-, Polyester-, Polyether-, Polycarbonat-, Polyurethan-, Polyacryl-, Methacryl- oder Polysilylketten mit einer Anzahl von Kettenatomen, die zwischen 1 und 18 liegt, und X₁, X₂, X₃ und X₄ - gleich oder voneinander verschiedenen in einer beliebigen Kombination - die nur dann vorliegen, wenn das entsprechende R₁, R₂, R₃ und R₄ verschieden ist von H, ausgewählt sind aus H oder einer reaktiven Gruppe, wie Cyano, Isocyano, Alkohol, Carbonyl, Carboxyl, Epoxy, Amin, Amid, Vinyl, Acryl, Methacryl, Chlorid, Bromid, Iodid, Nitrid, Phosphat, Silan, Siloxan, und
das Amin der isolierenden Zusammensetzung a) folgende allgemeine Formel aufweist
N(R₁X₁)(R₂X₂)(R₃X₃) (III)
wobei
R₁, R₂ und R₃ - gleich oder voneinander verschiedenen in einer beliebigen Kombination - ausgewählt sind aus H oder gesättigten oder ungesättigten, linearen oder verzweigten Alkyl-, Aryl-, Polyester-, Polyether-, Polycarbonat-, Polyurethan-, Polyacryl-, Methacryl- oder Polysilylketten mit einer Anzahl von Kettenatomen, die zwischen 1 und 18 liegt, und X₁, X₂ und X₃ - gleich oder voneinander verschiedenen in einer beliebigen Kombination - die nur dann vorliegen, wenn das entsprechende R₁, R₂ oder R₃ verschieden ist von H, ausgewählt sind aus H oder einer reaktiven Gruppe, wie Cyano, Isocyano, Alkohol, Carbonyl, Carboxyl, Epoxy, Amin, Amid, Vinyl, Acryl, Methacryl, Chlorid, Bromid, Iodid, Nitrid, Phosphat, Silan oder Siloxan.

4. Set nach einem der vorstehenden Ansprüche, wobei das mindestens eine Silan oder Siloxan oder Mischungen davon und das eine oder die mehreren optionalen Amine der isolierenden Zusammensetzung a) in einer Menge vorliegen, die von 0,1 bis 10 Gew.-%, bevorzugter von 0,5 bis 5 Gew.-% relativ zum Gesamtgewicht der isolierenden Zusammensetzung liegt.

5. Set nach einem der vorstehenden Ansprüche, wobei der Filmbildner der isolierenden Zusammensetzung a) in einer Menge vorliegt, die im Bereich von 0,1 bis 20 Gew.-%, bevorzugter von 0,2 bis 19 Gew.-% und besonders bevorzugt von 0,5 bis 5 Gew.-% relativ zum Gesamtgewicht der isolierenden Zusammensetzung liegt.

6. Set nach einem der vorstehenden Ansprüche, wobei die RMA-basierte, vernetzbare Farb- oder Lackzusammensetzung b) umfasst:
b1) mindestens eine Komponente mit mindestens 2 sauren Protonen (C-H-Donatorgruppen) in aktivierten Methylen- oder Methingruppen;
b2) mindestens eine Komponente mit mindestens 2 Ungesättigtheiten (C=C-Akzeptorgruppen), wobei die C-H-Donatorgruppen der Komponente b1) und die C=C-Akzeptorgruppen der Komponente b2) im gleichen Molekül vorliegen können;
b3) mindestens eine Base oder latente Base;
b4) optional mindestens eine Komponente, die in der Lage ist, die Reaktivität zu regulieren, wie beispielsweise eine Komponente umfassend eine X-H-Gruppe, wobei X gleich N, P, O oder S ist oder wobei X das C in einer Methylgruppe ist, wobei die Komponente b4) einen Säuregrad aufweist, der, gemessen als pKa in Wasser, um mindestens eine Einheit niedriger als der Säuregrad der C-H-Gruppe in Komponente b1) ist, wobei die Komponente b4) vorzugsweise einen pKa aufweist, der im Bereich von 7 bis 13 liegt, und wobei die Komponente b4) besonders bevorzugt ausgewählt ist aus substituiertem und unsubstituiertem 1,2,4 Triazol und 1,2,3 Triazol, Succinimid, Ethosuximid, 5, 5- Dimethylhydantoin, Benzotriazol, Benzolsulfonamid, Nitromethan, Isatin, Uracil, 4-Nitro-2-Methylimidazol, Ethylacetoacetat und Phenol;
b5) optional mindestens ein Lösungsmittel.

7. Set nach einem der vorstehenden Ansprüche, wobei das Lösungsmittel in der isolierenden Zusammensetzung a) und/oder die RMA-basierte, vernetzbare Farb- oder Lackzusammensetzung b) Folgendes umfasst oder aus Folgendem besteht: Wasser, Benzol, Toluol, Xylol und alle sonstigen aromatischen Lösungsmittel, aliphatische Olefine, Ethylacetat, Propylacetat, Butylacetat, Isobutylacetat und alle sonstigen Acetate, Aceton, Methylethylketon und alle sonstigen Ketone, Ethanol, Propanol, Isopropanol und alle sonstigen Alkohol, Glycol und Glycolether, Pyrrolidon und substituierte Pyrrolidone und Mischungen davon.

8. Verwendung des Sets nach einem der vorstehenden Ansprüche zum Beschichten eines Trägermaterials, vorzugsweise eines Trägermaterials wie eine Oberfläche oder ein dreidimensionaler Gegenstand aus Holz oder einem holzbasierten Material, optional mit einer Oberfläche aus imprägniertem Papier oder Cellulose-Material oder aus einem anderen Material, das saure Gruppen auf seiner Oberfläche aufweist.

9. Verwendung des Sets nach Anspruch 8, wobei die isolierende Zusammensetzung a) zum Beschichten eines Trägermaterials aufgebracht wird, vorzugsweise eines Trägermaterials, das ausgewählt ist aus einer Oberfläche oder einem dreidimensionalen Gegenstand, insbesondere aus Holz oder einem holzbasierten Material, optional mit einer Oberfläche aus imprägniertem Papier oder Cellulose-Material oder aus einem anderen Material, das saure Gruppen auf seiner Oberfläche aufweist.

10. Verfahren zum Beschichten eines Trägermaterials, wie einer Oberfläche oder eines dreidimensionalen Gegenstands mit einem Set nach einem der vorstehenden Ansprüche 1-7, umfassend folgende Schritte:
i. Aufbringen von mindestens einer Schicht der isolierenden Zusammensetzung a) auf der zu beschichtenden Oberfläche oder dem zu beschichtenden Gegenstand;
ii. Trocknen der Schicht der in Schritt i, aufgebrachten, isolierenden Zusammensetzung a) unter Umgebungsbedingungen oder durch Anwenden von Trocknungsverfahren;
iii. Aufbringen von mindestens einer Schicht der RMA-basierten Farb- oder Lackzusammensetzung b) auf das mit der isolierenden Zusammensetzung a) beschichtete und in Schritt ii. getrocknete Trägermaterial;
iv. Aushärten der in Schritt iii. aufgebrachten Schicht.

11. Dreidimensionaler, mindestens teilweise beschichteter Gegenstand oder mindestens teilweise beschichtete Oberfläche, die mit dem Verfahren nach Anspruch 10 erhalten wurden.

## Revendications

1. Un kit comprenant au moins les compositions suivantes appropriées pour la formation d'un revêtement multicouche
a) une composition isolante appropriée pour former au moins une couche d'une composition de revêtement multicouche, comprenant au moins un agent pelliculant, au moins un solvant et au moins un silane ou siloxane ou leurs mélanges et, facultativement, une ou des amines, dans lequel la quantité totale dudit au moins un silane ou siloxane ou de leurs mélanges et de la ou des amines facultatives varie de 2 à 30 % en poids, préférablement de 5 % à 20 % en poids relativement au poids total de la composition isolante ;
et
b) une composition réticulable de peinture ou de vernis à base d'addition de Michael réelle (RMA) et, facultativement, au moins
c) une composition comprenant une teinture.

2. Le kit selon la revendication précédente, dans lequel l'agent de pelliculage de la composition isolante a) est sélectionné parmi l'acrylate de vinyle, le nitrate de cellulose, l'alcool polyvinylique, l'éther polyvinylique, l'ester polyvinylique, l'acétate de polyvinyle, le butyrate d'acétate de cellulose, le propionate d'acétate de cellulose, la polyvinylpyrrolidone, les acrylates, les méthacrylates, les acrylamides, leurs copolymères ou des mélanges de ces derniers.

3. Le kit selon n'importe lesquelles des revendications précédentes, dans lequel le silane de la composition isolante a) a la formule générale suivante
Si(R₁X₁)(R₂X₂)(R₃X₃)(R₄X₄) (I)
dans laquelle
R₁, R₂, R₃ et R₄, égaux l'un à l'autre ou différents l'un de l'autre dans n'importe quelle combinaison, sont sélectionnés parmi H ou des chaînes alkyle, aryle, polyester, polyéther, polycarbonate, polyuréthane, polyacrylique, méthacrylique ou polysilyle saturées ou insaturées, linéaires ou ramifiées avec un nombre d'atomes de chaîne compris entre 1 et 18, et X₁, X₂, X₃ et X₄, égaux l'un à l'autre ou différents l'un de l'autre dans n'importe quelle combinaison, présents uniquement lorsque le R₁, R₂, R₃ et R₄ correspondant est différent de H, sont sélectionnés entre H ou un groupe réactif tel que cyano, isocyano, alcool, carbonyle, carboxyle, époxy, amine, amide, vinyle, acryle, méthacryle, chlorure, bromure, iodure, nitrure, phosphate, silane, siloxane et/ou le siloxane de la composition isolante a) a la formule générale suivante
X₁R₁Si(OR₂X₂)(OR₃X₃)(OR₄X₄) (**II**)
où
R₁, R₂, R₃ et R₄, égaux l'un à l'autre ou différents l'un de l'autre dans n'importe quelle combinaison, sont sélectionnés parmi H ou des chaînes alkyle, aryle, polyester, polyéther, polycarbonate, polyuréthane, polyacrylique, méthacrylique ou polysilyle saturées ou insaturées, linéaires ou ramifiées avec un nombre d'atomes de chaîne compris entre 1 et 18, et X₁, X₂, X₃ et X₄, égaux l'un à l'autre ou différents l'un de l'autre dans n'importe quelle combinaison, présents uniquement lorsque le R₁, R₂, R₃ et R₄ correspondant est différent de H, sont sélectionnés entre H ou un groupe réactif tel que cyano, isocyano, alcool, carbonyle, carboxyle, époxy, amine, amide, vinyle, acryle, méthacryle, chlorure, bromure, iodure, nitrure, phosphate, silane, siloxane et l'aminé de la composition isolante a) a la formule générale suivante
N(R₁X₁)(R₂X₂)(R₃X₃) (III)
dans laquelle
R₁, R₂ et R₃, égaux l'un à l'autre ou différents l'un de l'autre dans n'importe quelle combinaison, sont sélectionnés parmi H ou des chaînes alkyle, aryle, polyester, polyéther, polycarbonate, polyuréthane, polyacrylique, méthacrylique ou polysilyle saturées ou insaturées, linéaires ou ramifiées avec un nombre d'atomes de chaîne compris entre 1 et 18, et X₁, X₂ et X₃, égaux l'un à l'autre ou différents l'un de l'autre dans n'importe quelle combinaison, présents uniquement lorsque le R₁, R₂ ou R₃ correspondant est différent de H, sont sélectionnés entre H ou un groupe réactif tel que cyano, isocyano, alcool, carbonyle, carboxyle, époxy, amine, amide, vinyle, acryle, méthacryle, chlorure, bromure, iodure, nitrure, phosphate, silane, ou siloxane.

4. Le kit selon n'importe lesquelles des revendications précédentes, dans lequel chacun(e) desdits au moins un silane ou siloxane ou leurs mélanges et de la ou des amines facultatives de la composition isolante a) est présent(e) en une quantité allant de 0,1 % à 10 % en poids, plus préférablement de 0,5 % à 5 % en poids relativement au poids total de la composition isolante.

5. Le kit selon n'importe lesquelles des revendications précédentes, dans lequel l'agent de pelliculage de la composition isolante a) est présent en une quantité allant de 0,1 % à 20 % en poids, plus préférablement de 0,2 % à 19 % en poids, et le plus préférablement de 0,5 % à 5 % en poids relativement au poids total de la composition isolante.

6. Le kit selon n'importe lesquelles des revendications précédentes, en lequel la composition réticulable de peinture ou de vernis à base de RMA b) comprend :
b1) au moins un composant avec au moins 2 protons acides (groupes donneurs C-H) dans des groupes méthylène ou méthyne activés ;
b2) au moins un composant ayant au moins 2 insaturations (C = groupes accepteurs C), où lesdits groupes donneurs C-H du composant b1) et lesdits groupes accepteurs C = C du composant b2) peuvent être présents dans la même molécule ;
b3) au moins une base ou une base latente ;
b4) facultativement, au moins un composant apte à réguler les taux de réactivité, tel qu'un composant comprenant un groupe X-H où X est N, P, O, S ou où X est C dans un groupe méthyle, ledit composant b4) ayant une acidité, mesurée comme pKa dans l'eau, inférieure d'au moins une unité à l'acidité du groupe C-H dans le composant b1), préférablement ledit composant b4) ayant un pKa allant de 7 à 13, et le plus préférablement dans lequel le composant b4) est sélectionné parmi le 1,2,4 triazole et le 1,2,3 triazole substitués et non substitués, le succinimide, l'étosuccimide, la 5,5-diméthylhydantoïne, le benzotriazole, le benzène sulfonamide, le nitrométhane, l'isatine, l'uracile, le 4-nitro-2-méthylimidazole, l'acétoacétate d'éthyle et le phénol ;
b5) facultativement, au moins un solvant.

7. Le kit selon n'importe lesquelles des revendications précédentes, en lequel le solvant dans la composition isolante a) et/ou dans la composition réticulable de peinture ou de vernis à base de RMA b) comprend ou consiste en de l'eau, du benzène, du toluène, du xylène et n'importe quels autres solvants aromatiques, des oléfines aliphatiques, de l'acétate d'éthyle, de l'acétate de propyle, de l'acétate de butyle, de l'acétate d'isobutyle et n'importe quels autres acétates, de l'acétone, de la méthyléthylcétone et n'importe quels autres cétones, de l'éthanol, du propanol, de l'isopropanol et n'importe quel autre alcool, n'importe quel glycol et éther glycolique, de la pyrrolidone et des pyrrolidones substituées et des mélanges de ces derniers.

8. Utilisation du kit selon n'importe lesquelles des revendications précédentes pour le revêtement d'un substrat, préférablement d'un substrat tel qu'une surface ou un objet tridimensionnel, fait en bois ou en matériau à base de bois, facultativement surfacé par du papier imprégné ou du matériau cellulosique, ou fait en un autre matériau présentant des groupes acides sur sa surface.

9. Utilisation du kit selon la revendication 8, dans lequel la composition isolante a) est appliquée pour le revêtement d'un substrat, préférablement d'un substrat choisi parmi une surface et un objet tridimensionnel, plus préférablement fait en bois ou en matériau à base de bois, facultativement surfacé par du papier imprégné ou du matériau cellulosique, ou fait en un autre matériau présentant des groupes acides sur sa surface.

10. Un procédé pour revêtir un substrat, tel qu'une surface ou un objet tridimensionnel, avec un kit selon n'importe lesquelles des revendications précédentes 1 à 7, comprenant les étapes suivantes :
i. application sur la surface ou l'objet à revêtir d'au moins une couche de la composition isolante a) ;
ii. séchage de la couche de composition isolante a) appliquée à l'étape i., en maintenant dans des conditions ambiantes ou en utilisant des procédés de séchage ;
iii. application d'au moins une couche de la composition de peinture ou de vernis à base de RMA aux parties du substrat revêtu avec la composition isolante a) séchée à l'étape ii. ;
iv. durcissement de la couche appliquée à l'étape iii.

11. Un objet tridimensionnel au moins partiellement revêtu ou une surface au moins partiellement revêtue, obtenu(e) selon le procédé de la revendication 10.
